Europäisches Patentamt

European Patent Office

Office européen des brevets

(19)

(11) Publication number: **0 129 853**
**B1**

# EUROPEAN PATENT SPECIFICATION

(12)

(45) Date of publication of patent specification: 07.09.88

(51) Int. Cl.⁴: **B 25 J 11/00,** G 05 B 19/417

(21) Application number: 84107121.0

(22) Date of filing: 20.06.84

(54) Cellular type robot apparatus.

(30) Priority: 22.06.83 JP 110925/83

(43) Date of publication of application:
02.01.85 Bulletin 85/01

(45) Publication of the grant of the patent:
07.09.88 Bulletin 88/36

(84) Designated Contracting States:
DE FR GB NL

(56) References cited:
EP-A-0 067 446
EP-A-0 100 684
US-A-4 166 543

DR. GÜNTER HUHN "Datenverarbeitung", 1969
VERLAG DIE WIRTSCHAFT, Berlin

(73) Proprietor: HITACHI, LTD.
6, Kanda Surugadai 4-chome Chiyoda-ku
Tokyo 100 (JP)

(72) Inventor: Mori, Kinji
569-1-7-408, Kamoshida-cho Midori-ku
Yokohama-shi Kanagawa-ken (JP)
Inventor: Miyamoto, Shoji
7-2-1-103, Arima Miyamae-ku
Kawasaki-shi Kanagawa-ken (JP)
Inventor: Ihara, Hirokazu
1-15-11, Minami-naruse
Machida-shi Tokyo (JP)

(74) Representative: Schulz, Rütger, Dr. et al
STREHL, SCHÜBEL-HOPF, SCHULZ
Patentanwalte Widenmayerstrasse 17
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### BACKGROUND OF THE INVENTION
Field of the Invention

This invention relates to a robot apparatus consisting of a plurality of robot cells which are cooperatively combined.

### DESCRIPTION OF THE PRIOR ART

Industrial robots which comprise individual robot cells and arms for interconnecting said cells, wherein the arms consist of a plurality of limbs the respective positions of which may be determined by sensors are known in the state of the art, see e.g. EP—A2—0067446.

In a conventional robot, the function of robot is distributed to each portion, the data from each distributed portion is gathered by a central processing unit, and the central processing unit in turn operates each distributed portion by giving instruction thereto.

It has therefore been necessary to produce a specific apparatus for each distributed portion, and when the central unit is out of order or operates abnormally, it is likely that the robot as a whole undergoes breakdown or operates dangerously. Moreover, the robot must be changed in accordance with the size of an object which is to be dealt with by the robot. The freedom of operation of the robot, which is determined by the number of joints of arm, is low, so that the robot cannot operate flexibly and continuously, and its response is low.

### SUMMARY OF THE INVENTION

The present invention is directed to provide a robot apparatus which can be assembled by merely combining in various ways a plurality of autonomous cellular robots, that can operate independently, with one another, eliminates the necessity of a central unit but does not undergo system breakdown when part of the cellular robots is or are out of order, has high response because the individual cellular robots react simultaneously, can perform flexible operation, and controls the operations of the cellular robots because they exchange information between them and coordinate with one another to control their operations by themselves.

The invention is given by the robot apparatus of claim 1. Preferred embodiments are shown in the subclaims.

The invention will now be described and exemplificated by the accompanying drawings, in which

Figures 1 and 2 show the overall construction of the system of the present invention;

Figure 3 shows an arm driving device of one embodiment of the present invention;

Figure 4 shows a first embodiment of the cell of the present invention;

Figure 5 shows one embodiment of a controller inside the cell of the present invention;

Figures 6 through 8 show the concepts of the operation of a group of cellular robots of the present invention;

Figure 9 shows the construction of controller inside the cell of the present invention;

Figure 10 shows the concept of the motion of the arm of the cellular robot of one embodiment of the present invention; and

Figures 11 through 13 show the operation due to the relation between a group of cells of the present invention and an object.

### DESCRIPTION OF THE PREFERRED EMBODIMENTS

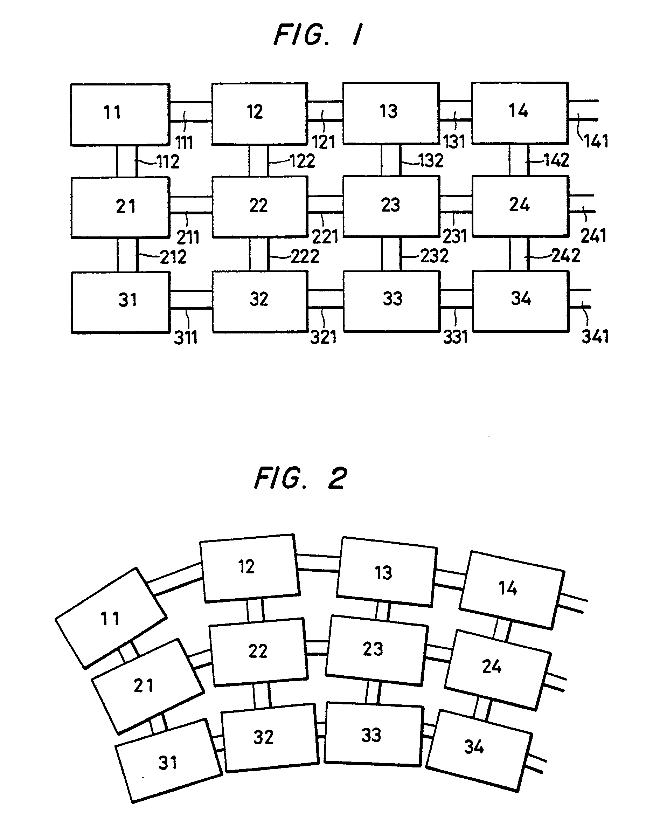

Figure 1 shows the overall construction of the system. The robot is constructed as a whole by a plurality of cellular robots 11, 12, . . ., and these robots are connected to adjacent cellular robots by arms 111, 121, . . . 112, 212, . . . In Figure 1, the cellular robots are shown disposed on a two-dimensional plane, and each robot 11, 12, . . . is connected to the cellular robots on the lateral and longitudinal axes by the lateral arms 111, 121, . . . and the longitudinal arms 112, 122, . . ., respectively.

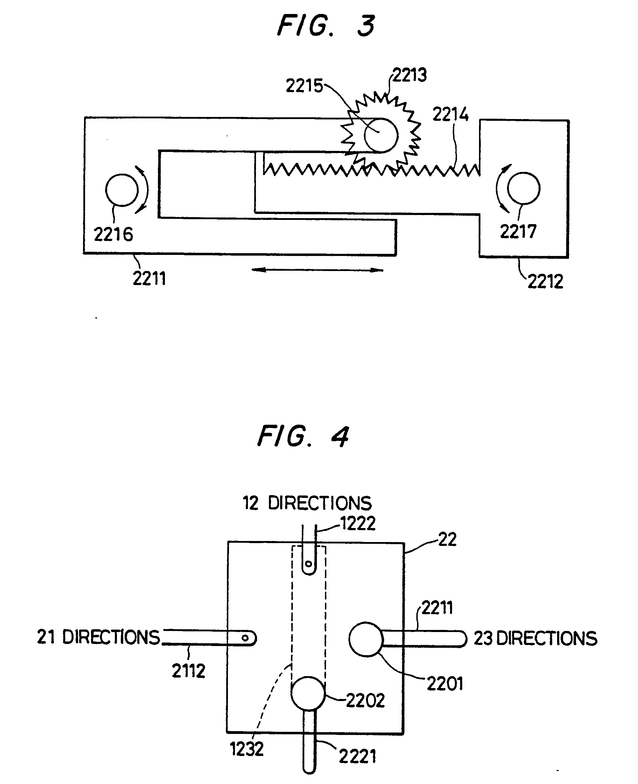

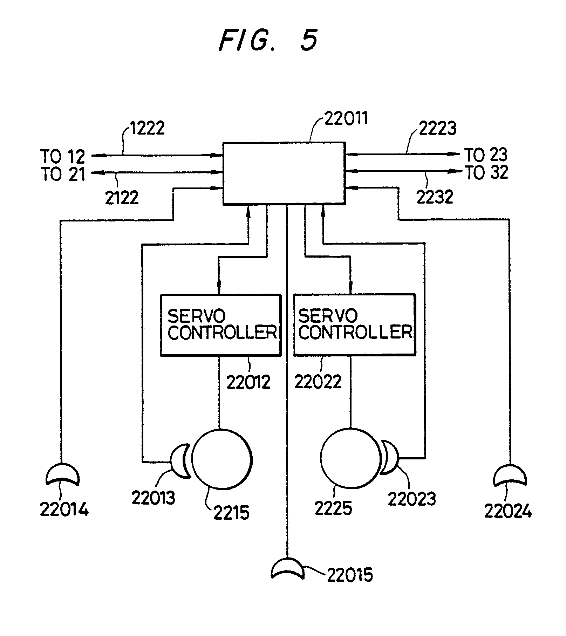

The structure of each robot is changed as depicted in Figure 2 when the lengths of the respective lateral and longitudinal arms are adjusted. An arm driver such as shown in Figure 3 and a controller for driving the arm such as shown in Figure 5 are incorporated in each cellular robot. Each controller is connected to the controllers of the adjacent robots by transmission routes so as to exchange information. Since the information is exchanged between the adjacent cellular robots, each robot operates cooperatively.

Figure 3 shows the arm driver of each cellular robot. One of the arms is an active arm 2211 equipped with a servo motor 2215 and a gear 2213, while the other is a negative arm 2212 equipped with a guide 2214 for the gear 2213. These active and negative arms 2211 and 2212 are connected to the cellular robot main body by shafts 2216 and 2217, respectively. Unless these shafts are locked, the arms can freely change their directions. The arm length can also be adjusted freely by rotating the gear 2213 using the servo motor 2215.

As shown in Figure 4, the active arms 2211, 2221 and the negative arms 1222 and 2112 are disposed inside the cellular robot in the lateral and transverse directions, respectively, and are connected to four-cellular robots adjacent thereto. The robot can move freely in the lateral and longitudinal directions by the active arms 2211 and 2221. In the active arms, too, the gear can be freely rotated (or be brought into the free state) by cutting off the power of the servo motor 2215. The arm length can be fixed (or locked) by fixing the gear 2213. A longitudinal arm fixing connector 1232 is disposed so as to integrally connect the active/negative arms 1222, 2221 of the longitudinal axis and to prevent them from rotating independently.

The internal construction of the cellular robot is such as shown in Figure 5. The controller 22011 calculates the moving quantity of the arm on the basis of information applied thereto from sensors 22014, 22024 for recognizing an object existing in the longitudinal and lateral directions, for example, from an angle sensor for measuring the angle between the negative longitudinal and lateral arms, and from the adjacent robots through the transmission routes 1222, 2122, 2223, 2232, and generates instruction to servo controllers 22012, 22022 so as to actuate the servo motors 2215, 2225 on the active arms in both lateral and longitudinal directions. The servo motors 2215, 2225 rotate on the basis of this instruction and turn the gear 2213. The angle of rotation of the servo motors 2215, 2225 are sensed by the sensors 22013, 22023, and are fed back to the controller 22011. If the instructed angle of rotation is different from the actual angle of rotation of the servo motor, the controller applies a correcting angle of rotation to the servo controller.

The controller also gives the instruction whether the gear should be kept under the free or locked state.

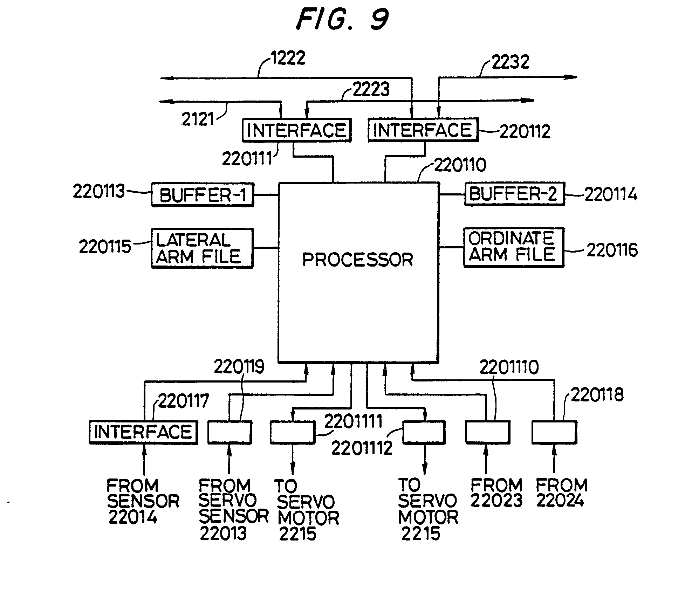

Figure 9 shows the internal construction of the controller. The processor 22010 of the controller exchanges the data with the adjacent robots through the transmission routes 1222, 2121, 2232, 2223 and interfaces.220111, 220112. It also gives and receives signal data with the sensor, the servo sensor and the servo motor through the interfaces 220117—2201111. The data received from, or to be delivered to, the interfaces 220111, 220113, 220115, 220117, 220119, 2201111 are stored in buffers 1, 220113. On the other hand, the data to be received from and delivered to, through the interfaces 220114, 220116, 220118, 2201110, 2201112 are stored in buffers 2, 220114. The buffer 1 stores the data relating to the lateral direction, and the buffer 2 does the data on the longitudinal direction. On the basis of the data inside these buffers, the processor 220110 calculates the adjusting quantities of the lateral and longitudinal active arms, and the result of calculation is stored in each arm file 220115, 220116. The processor 220110 controls the servo motors 2215, 2225 on the basis of the data inside these files 220115, 220116.

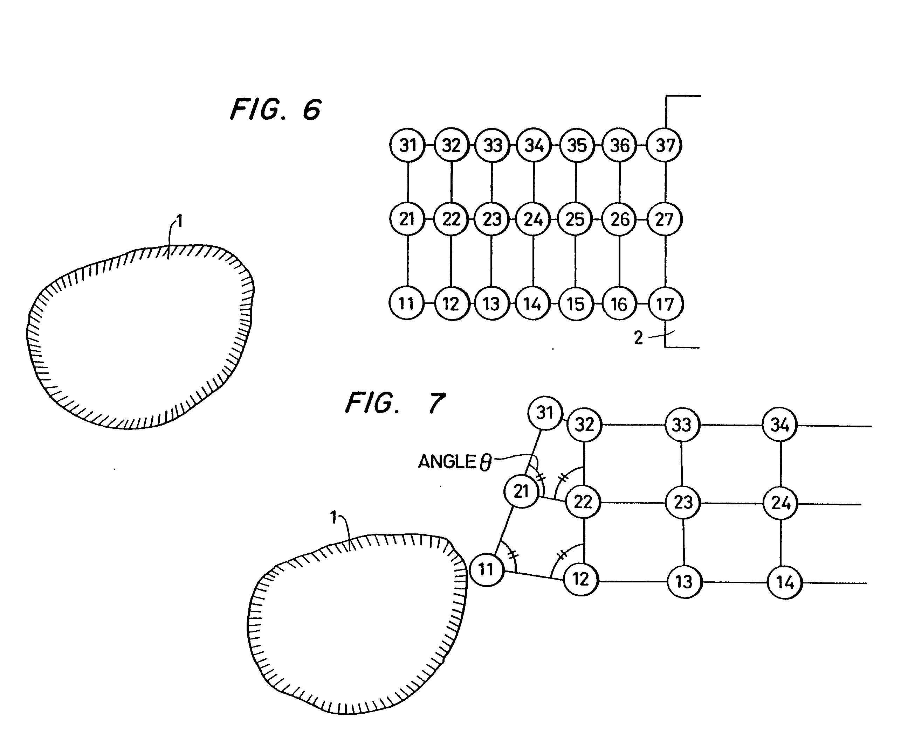

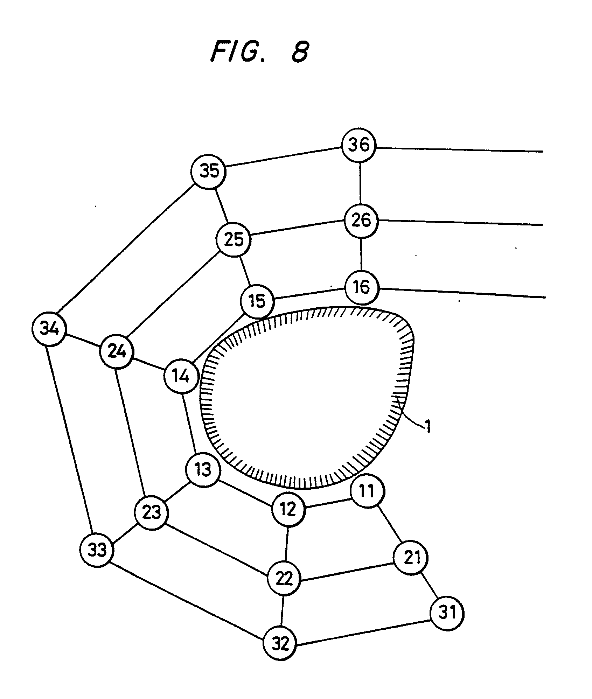

The operation of each cellular robot and the operation of a group of cellular robots will now be described with reference to Figures 6 through 8.

It will be assumed that the cellular robots 11 through 37 are arranged in three columns and seven rows and 17, 27 and 37 are fixed to support poles. These celllular robots are directed (1) to encompass an object 1, (2) to grip the object 1 with a predetermined force, and (3) to move the object 1, and the robots operate in the three steps in accordance with the object. First of all, the first step will be described. Assuming now that the object 1 and the group of the cellular robots are spaced apart from each other as shown in Figure 6, then each cellular robot extends the lateral arm if the robot is out of contact from the object 1. In this case, the longitudinal arm is locked and the lateral arms of the cellular robots 21—27, 31—37 are kept free so that the cellular robots of each row move in parallel with one another. When the lateral arms of the cellular robots 11—17 are gradually extended, the sensor 22024 of the cell 11 first senses the object 1. Then, the free state of the lateral arm of each robot 11, 21, 31 is released. As the arms of the cellular robots 11—17 are extended further, each cellular robot 11 moves towards the object 1, so that the arm between the cellular robots 11 and 12 keeps an angle $\theta$ relative to the longitudinal arms between the cellular robots 32, 22 and 12. The cellular robots 11, 21, 31 control the active arms so that the lateral arms of the adjacent cellular robot pairs (11, 12), (21, 22), (31, 32) of each row are parallel to one another. Therefore, the cellular robot 12 which detects the change of the longitudinal/lateral negative arm angle $\theta$ by its arm angle sensor 22015 informs those cellular robots 11, 22 which have the active arms and are adjacent thereto in the lateral and longitudinal directions, of the angle $\theta$ at that time.

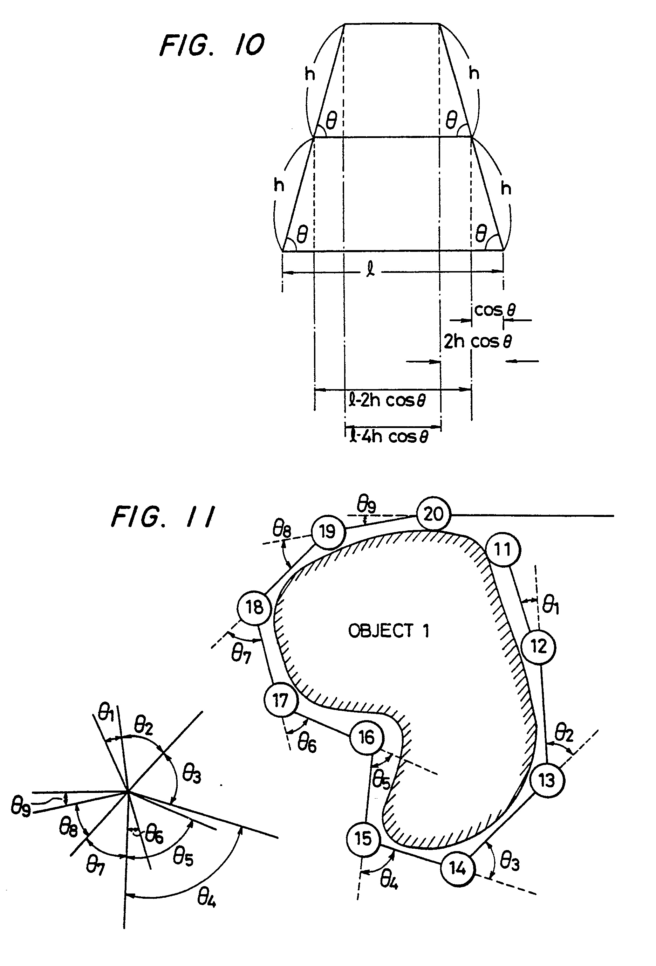

Upon receiving this data $\theta$, the cellular robot 22 likewise transmits the data to the adjacent robots 21 and 32, at a scheduled time and the cellular robot 32 transmits it to the robot 31 upon receiving the data $\theta$. In this manner, the angle $\theta$ is detected at a scheduled time and is transmitted to the adjacent robots. The cellular robot 11 informs the robots 21 and 31 of the arm length between the robots 11 and 12. The cellular robots 21, 31 having the active arms calculate the lateral arm lengths in accordance with the algorithm shown in Figure 10. As the arm length h between the robots 11 and 21 is known in advance, the robot 21, for example, calculates the lateral arm length l (21, 22) in accordance with the following equation on the basis of the lateral arm length h and the angle $\phi$ informed from the robots 12 and 11:

$$l\ (21, 22) = l - 2h\ \cos\theta \qquad (1)$$

Likewise, the cellular robot 31 calculates l (31, 32) in accordance with the following equation:

$$l\ (31, 32) = l - 4h\ \cos\theta \qquad (2)$$

The cellular robots 21 and 31 move the servos of the lateral active arms in accordance with this value, thereby adjusting the arm lengths. When the robots 21 and 31 adjust the arm lengths, the cellular robot 11 does not change the arm length, while the robot 12 fixes the shaft 2216 of the arm between it and the robot 11 to prevent its rotation.

In this manner, the cellular robot 11 changes the arm angle on the basis of the operations of the object sensors 22014, 22024 while extending the lateral arm but not separating away from the object. If the arm angle between the cellular robots 11 and 12 changes, each cellular robot 21—27, 31—37 adjusts the arm in accordance with the algorithm described above.

In order to let the cellular robots 12—17 smoothly entwine the object 1, the cellular robots 12, 22, 32 on each row periodically gives the information on the arm angle and length relative to the cellular robot 11, 21, 31 to the subsequent cellular robot 13, 23, 33 on the rear row. Similarly, the robots 13, 23, 33 inform the subsequent robots 14, 24, 34 of the arm angle and length at that time. In this manner, the cellular robots on the front row gives the information on the existing arm angle and length to the subsequent robots on the rear row. As each cellular robot advances and reaches the position where the subsequent robot has occupied, it adjusts the arm angle and length on the basis of the data that has already given thereto.

Incidentally, when the arm angle θ becomes small and the arm length between the adjacent cellular robots 11—12 becomes small, the arm length l (31, 32) between the cellular robots 31 and 32 is below the minimum arm length $l_{min}$, that is,

$$l (31, 32) = l - 4h \cos\theta$$

$$<l_{min}$$

and the cellular robot 31 can not accomplish the arm angle θ. In other words, since the robot 31 can not accomplish the arm angle θ, it comes into contact with the cellular robot 32. Since such occurrence is possible, each cellular robot controls the servo so as to realize the minimum arm length, $l_{min}$ if the calculated value of the lateral arm length is below the predetermined minimum arm length $l_{min}$.

Judgement whether or not the arms entwine the object is made in the following manner. If the arms are judged as entwining the object, the next second step is followed. Figure 11 shows the state in which the arms encompass the object 1. The cellular robots 12 through 19 between the cellular robots 11 and 19 on both ends coming into contact with the object 1, and the cellular robot 20 calculates the angle of their lateral arms on the basis of the value of the arm angle sensor 22015. If the angle θ exists on the side opposite to the longitudinal arm,

$$\theta > 0$$

and when the angle exists on the side of the longitudinal arm,

$$\theta < 0.$$

In Figure 11, therefore,

$$\theta_5 < 0$$

for the cellular robot 16, and

$$\theta_1, \theta_2, \theta_3, \theta_4, \theta_6, \theta_7, \theta_8, \theta_9 > 0$$

for the cellular robots other than the cellular robot 16. Each cellular robot exchanges this angle at a scheduled time, and calculates the sum θ of these angles:

$$\sum_{i=1}^{9} \theta_i = \bar{\theta}$$

When θ is greater than a certain predetermined angle θ, the arms are judged as entwining the object 1.

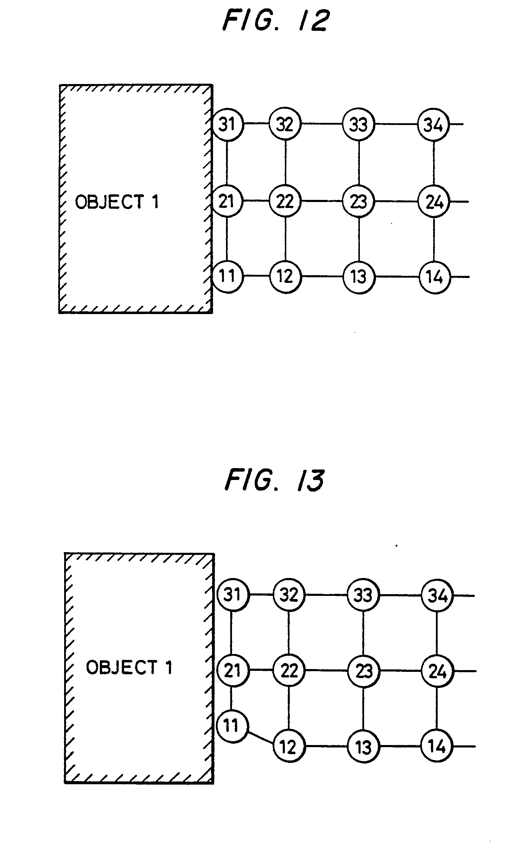

Incidentally, in Figure 7, it is assumed that among the tips of the group of cellular robots, only one cellular robot 11 senses the object 1. However, the cellular robots 11, 21, 31 might sense simultaneously the object 1 as depicted in Figure 12. In such a case, each cellular robot of the group can not extend the arm. In the case of Figure 7, too, there might be the case in which the cellular robot 11 does not slide on the object 1 when it comes into contact with the object, and can not extend the arm, either. In this case, the cellular robot 11 of the first row, for example, is arranged in advance so as to slide along the object. Therefore, the cellular robot 21 contracts the longitudinal active arm by a predetermined length, and makes free the lateral active arm of the cellular robot 11. As a result, the cellular robot 11 is attracted to the robot 12 as shown in Figure 13. Next, the arm angle between the cellular robots 11 and 12 is fixed, and the cellular robot 21 extends the longitudinal active arm to the original length. Thereafter, the cellular robots 11—17 of the first row extend their lateral active arms and encompass the object 1.

The second step is to grip the object 1 with a predetermined level of force when the group of the cellular robots encompass the object 1. First, each cellular robot stops extending the lateral arm. The cellular robots 21—27 and 31—37 other than of the first row fix the arm angles in the longitudinal and lateral directions, respectively.

Next, the cellular robots 21—26 make control so as to extend the ordinate arm length between the cellular robots that are in contact with the object 11—16 and the cellular robots 21—26. After the arms are extended in a predetermined length, control of fastening the object 1 is completed.

The third step is to move the object that has thus been gripped. This can be accomplished when the cellular robots on the column other than the cellular robots coming into contact with the object 1 change their arm length in the same way as in the first step.

Since the robot of the present invention consists of a large number of cellular robots, the robot does not undergo breakdown even when part of the cellular robots are out of order. It will be assumed that the cellular robot 22 of the second row, for example, in Figure 7 is out of order and enters the free state. In this case, the arm length of the cellular robot 22 is primarily determined by the control of the arm length of the adjacent cellular robots. When the cellular robot 12 of the first row is out of order, the longitudinal/lateral arm angle θ can not be measured. Accordingly, the cellular robots 11, 21 and 31 keep the previous arm lengths fixed. When the cellular robot 32 of the third row is out of order, no change of the control method is necessary for the other cellular robots. However, when any of the cellular robots 11, 21, 31 of the first column is out of order, the fastening control of the second step can not be effected, so that the cellular robots 12, 22, 32 of the second row make control in place of the former.

The embodiment described above deals with the method of controlling the group of cellular robots when the object 1 exists, but even when the object 1 does not exist, the group of cellular robots can be operated in accordance with a predetermined pattern. This can be accomplished by informing each cellular robot of the first row, of the lateral arm length and of the arm angle so that each cellular robot can make control.

As can be clearly understood from the description that has been thus given, the hardware and software for each cellular robot are uniform, and control by each cellular robot is made through the communication between the adjacent cellular robots. Accordingly, there is no necessity at all of the change of the content of each cellular robot even when the number of cellular robots is increased or decreased.

Though the robot structure described above is a rectangular shape consisting of three rows, a robot construction consisting of four or more rows or a construction having a hexagonal shape can be similarly realized.

The arm control of each cellular robot may be made by methods other than the method described above.

The present invention makes it possible to constitute a robot by merely combining a plurality of autonomous cellular robots having the same function, and to change the number of cellular robots to be combined in accordance with an intended object. The hardware and software of the other cellular robots need not be changed at all even when the combination of the cellular robots or particular cellular robots are expanded or diminished. Moreover, the robot as a whole does not undergo breakdown even when part of these cellular robots are out of order, but can keep the predetermined function. Since a large number of cellular robots can be used, the freedom of the operation of the robot as a whole can be increased in proportion to the number of cellular robots connected. Since each cellular robot operates independently, the response of the robot as a whole can be improved.

**Claims**

1. A robot apparatus comprising cooperatively combined robot cells (11—37), each robot cell being connected to at least one of the other robot cells by an arm (111, 121, ... 112, 212 ...; 1222, 2221; 2112, 2211), each robot cell comprising at least one arm driver (2213, 2215) and a controller (22011) for driving the or each arm, wherein each of the robot cells includes means (22013, 22015, 22023) for detecting the position of itself relative to at least one adjacent robot cell and means (220111, 220112) for sending to at least one adjacent robot cell on a transmission medium (1222, 2121, 2223, 2232) information related to the position of itself relative to at least one adjacent robot cell, said robot apparatus being capable of controlling its movement through coordinated but independent movement by said robot cells, each controller independently determining and controlling movements of its robot cell based on information received from the transmission medium.

2. The robot apparatus according to claim 1, characterized in that all robot cells (11—37) are uniformly configured with respect to each other.

3. The robot apparatus according to claims 1 or 2, characterized by means for exchanging information between a plurality of said robot cells (11—37) and in that said means for exchanging information are connected to means for setting the object of action of said robot cells (11—37) as a group.

4. The robot apparatus according to any of the claims 1 to 3, characterized in that each cell comprises at least one arm of variable length.

5. A robot apparatus according to any of the claims 1 to 4, characterized in that each cell includes two sets of longitudinal and lateral arms.

6. A robot apparatus according to any of the claims 1—5, characterized in that each of said robot cells (11—37) further includes means for sensing the existence of an object in proximity thereto and means for sensing contact with said object and that a plurality of said robot cells (11—37) include means to control the operation of said robot cells (11—37) so as to come into contact with said object.

7. A robot apparatus according to claim 6, characterized in that the robot cells coming into contact with said object are controlled by their respective controllers to conjointly grasp said object.

8. A robot apparatus according to claim 6 or claim 7, characterized in that each of said robot cells (11—37) is capable of sliding on said object upon coming into contact therewith allowing adjacent robot cells to come into contact with said object.

**Patentansprüche**

1. Roboter-Vorrichtung mit kooperierend miteinander verknüpften Roboterzellen (11—37), wobei jede Roboterzelle über einen Arm (111, 121 ... 112, 212 ...; 1222, 2221; 2112, 2211) mit wenigstens einer anderen Roboterzelle verbunden ist, und jede Roboterzelle wenigstens einen Armantrieb (2213, 2215) und eine Steuerung (22011) für den Antrieb des bzw. jeden Armes aufweist, wobei jede Roboterzelle eine Einrichtung (22013, 22015, 22023) zum Feststellen der eigenen Position bezüglich wenigstens einer benachbarten Roboterzelle und eine Einrichtung (220111, 220112) aufweist, um wenigstens zu einer benachbarten Roboterzelle auf einem Übertragungsmedium (1222, 2121, 2223, 2232) Information über die eigene Position relativ zu einer benachbarten Roboterzelle zu senden, wobei die Robotervorrichtung befähigt ist, die eigene Bewegung durch eine koordinierte, aber unabhängige Bewegung durch die Roboterzellen zu steuern, und wobei jede Steuerung auf der Grundlage der von dem Übertragungsmedium empfangenen Informationen die Bewegungen der eingenen Roboterzelle unabhängig bestimmt und steuert.

2. Robotervorrichtung nach Anspruch 1, dadurch gekennzeichnet, daß alle Roberterzellen (11—37) zueinander einheitlich ausgestaltet sind.

3. Robotervorrichtung nach Anspruch 1 oder 2, dadurch gekennzeichnet, daß eine Vorrichtung zum Austauschen von Information zwischen einigen der Roboterzellen (11—37) vorgesehen ist, und daß diese Vorrichtung zum Austauschen von Information verbunden ist mit einer Vorrichtung zum Einstellen des Objekts der Einwirkung der Roboterzellen (11—37) als Gruppe.

4. Robotervorrichtung nach einem der Ansprüche 1 bis 3, dadurch gekennzeichnet, daß jede Zelle wenigstens einen Arm veränderlicher Länge aufweist.

5. Robotervorrichtung nach einem der Ansprüche 1 bis 4, dadurch gekennzeichnet, daß jede Zelle zwei Sätze von longitudinalen und von lateralen Armen aufweist.

6. Robotervorrichtung nach einem der Ansprüche 1 bis 5, dadurch gekennzeichnet, daß jede der Roboterzellen (11—37) ferner eine Einrichtung zum Feststellen der Gegenwart eines Objektes in ihrer Nähe und eine Vorrichtung zum Feststellen einer Berührung mit diesem Objekt aufweist, und daß eine Anzahl von Roboterzellen (11—37) eine Vorrichtung aufweist, die die Arbeitsweise der Roboterzellen so steuert, daß sie mit dem Objekt in Berührung kommen.

7. Robotervorrichtung nach Anspruch 6, dadurch gekennzeichnet, daß die mit dem Objekt in Berührung kommenden Roboterzellen durch ihre jeweiligen Steuerungen so gesteuert werden, daß sie gemeinsam das Objekt ergreifen.

8. Robotervorrichtung nach Anspruch 6 oder 7, dadurch gekennzeichnet, daß jede der Roboterzellen (11—37) befähigt ist, nach einem Berühren des Objektes über es hinwegzugleiten und den benachbarten Roboterzellen die Berührung des Objektes zu ermöglichen.

**Revendications**

1. Dispositif formant robot comportant des cellules (11—37) combinées de manière à coopérer entre elles, chaque cellule du robot étant raccordée à au moins l'une des autres cellules du robot au moyen d'un bras (111, 121, . . . , 112, 212, . . .; 1222, 2221; 2112, 2211) et comportant au moins un dispositif (2213, 2215) d'entraînement du bras et un dispositif (22011) de commande d'entraînement du ou de chaque bras, et dans lequel chacune des cellules du robot contient des moyens (22013, 22015, 22023) servant à détecter la position de cette cellule par rapport à au moins une cellule voisine du robot, et des moyens (220111, 220112) servant à envoyer à au moins une cellule voisine du robot, par l'intermédiaire d'un milieu de transmission (1222, 2121, 2223, 2232), une information concernant la position de cette cellule par rapport à au moins une cellule voisine du robot, ledit dispositif formant robot étant capable de commander son déplacement conformément à un déplacement coordonné, mais indépendant, au moyen desdites cellules, chaque dispositif de commande déterminant et commandant, d'une manière indépendante, les déplacements de la cellule du robot, qui lui est associée, sur la base d'une information reçue en provenance du milieu de transmission.

2. Dispositif formant robot selon la revendication 1, caractérisé en ce que toutes les cellules (11—37) du robot sont conformées d'une manière uniforme les unes par rapport aux autres.

3. Dispositif formant robot selon la revendication 1 ou 2, caractérisé par des moyens pour échanger une information entre une pluralité desdites cellules (11—37) du robot, et en ce que lesdits moyens d'échange de l'information sont raccordés à des moyens permettant de régler le but de l'action desdites cellules (11—37) du robot en tant que groupe.

4. Dispositif formant robot selon l'une quelconque des revendications 1 à 3, caractérisé en ce que chaque cellule comporte au moins un bras possédant une longueur variable.

5. Dispositif formant robot selon l'une quelconque des revendications 1 à 4, caractérisé en ce que chaque cellule contient deux ensembles de bras longitudinaux et latéraux.

6. Dispositif formant robot selon l'une quelconque des revendications 1—5, caractérisé en ce que chacune desdites cellules (11—37) du robot comporte en outre des moyens pour détecter la présence d'un objet dans sa proximité, et des moyens pour détecter un contact avec ledit objet, et qu'une pluralité desdites cellules (11—37) du robot comprenent des moyens pour commander de fonctionnement desdites cellules (11—37) du robot de manière qu'elles viennent en contact avec ledit objet.

7. Dispositif formant robot selon la revendication 6, caractérisé en ce que les cellules du robot, qui viennent en contact avec ledit objet, sont commandées par leurs dispositifs respectifs de commande pour saisir conjointement ledit objet.

8. Dispositif formant robot selon la revendication 6 ou 7, caractérisé en ce que chacune desdites cellules (11—37) du robot peut glisser sur ledit objet lors de sa venue en contact avec ce dernier, ce qui permet à des cellules voisines du robot de venir en contact avec ledit objet.

## FIG. 1

## FIG. 2

# FIG. 3

2215    2213    2214

2216    2217

2211    2212

# FIG. 4

12 DIRECTIONS

1222

22

21 DIRECTIONS

2112

2211

23 DIRECTIONS

2201

2202

1232    2221

# FIG. 5

**FIG. 6**

**FIG. 7**

0 129 853

FIG. 8

5

# FIG. 9

# FIG. 10

# FIG. 11

## FIG. 12

## FIG. 13